# EUROPEAN PATENT SPECIFICATION

(11) **EP 3 674 899 B1**
(45) Date of publication and mention of the grant of the patent: **13.11.2024**
(21) Application number: 19200263.2
(22) Date of filing: 27.09.2019
(51) Int. Cl.: G06F 9/54, G06F 9/451, H04L 51/10

(54) **METHOD AND DEVICE FOR SHARING MULTIMEDIA RESOURCE, AND STORAGE MEDIUM**
VERFAHREN UND VORRICHTUNG ZUR GEMEINSAMEN NUTZUNG VON MULTIMEDIA-RESSOURCEN UND SPEICHERMEDIUM
PROCÉDÉ ET DISPOSITIF POUR LE PARTAGE DE RESSOURCES MULTIMÉDIA ET SUPPORT D'INFORMATIONS

(30) Priority: 28.12.2018 CN 201811622651
(43) Date of publication of application: 01.07.2020
(73) Proprietor: Beijing Xiaomi Mobile Software Co., Ltd., Beijing 100085 (CN)
(72) Inventor: PEI, Zetan, Beijing, 100085 (CN); LU, Zhenzhou, Beijing, 100085 (CN); YANG, Huiying, Beijing, 100085 (CN)
(74) Representative: Dehns Germany Partnerschaft mbB

(56) References cited:
- US-A1- 2014 157 168
- US-A1- 2015 074 548
- US-A1- 2015 177 954
- US-A1- 2016 117 072

## Description

### CROSS-REFERENCE TO RELATED APPLICATION

This application is filed upon and claims priority to Chinese Patent Application No. 201811622651.9, filed on December 28, 2018.

### TECHNICAL FIELD

The present disclosure relates to the technical field of electronics, and more particularly, to a method and device for sharing a multimedia resource, and a storage medium.

### BACKGROUND

In daily work and life, we often encounter such a scenario in which users need to share multimedia resources such as text, shopping links, audio and video links, files or pictures with others through terminals to meet information spread demands.

In a related art, users are generally required to perform multiple operations in order to achieve multimedia resource sharing. For example, for link sharing, a user needs to perform in turn: selecting a link → clicking on a copy option to copy the link to a pasteboard → selecting a recipient- pasting the link → clicking on a sending option; and for picture sharing, the user needs to perform in turn: selecting a picture → downloading the picture → uploading the picture → clicking on the sending option. The above sharing modes result in complicated operation steps and low sharing efficiency, which seriously affect the user experience. In a resource sharing scenario, high efficiency is a necessary performance. For this reason, how to efficiently complete multimedia resource sharing has become an urgent problem to be solved by those skilled in the art.

US 2016/0117072 A1 discloses a method for an improved drag-and-drop operation on a mobile device, which includes: identifying a drag area in a user interface of a first mobile application in response to a drag command, identifying an entity from a data store based on recognition performed on content in the drag area, receiving a drop location associated with a second mobile application, determining an action to perform in the second mobile application based on the drop location, and performing the action in the second mobile action using the entity.

US 2016/062557 A1 discloses a method for processing contents at an electronic device. The method includes generating a first content corresponding to a user input applied to content via the electronic device, and displaying a floating user interface (UI), which displays first scrap information on the first content, on a screen of the electronic device.

US 2015/026620 A1 discloses a mobile terminal including a wireless communication unit configured to provide wireless communication; a touchscreen; a memory; and a controller configured to display a clipboard including copied content on the touchscreen, receive a paste selection signal indicating a pasting of the copied content from the clipboard to another location on the touchscreen, determine a property of the other location of the touchscreen, and modify a type of the copied content to correspond to the determined property of the other location when the content is pasted to the other location.

### SUMMARY

The present invention is defined in the independent claims, and the preferable features according to the present application are defined in the dependent claims.

The present disclosure provides a method and device for sharing a multimedia resource, and a storage medium, which can overcome the problem of low sharing efficiency in the related art.

According to a first aspect of the present invention, a method including the features of claim 1 is provided.

In an embodiment, the operation of moving the first floating window to the target area of the screen may include that:
in a case that the first floating window is a first window to be held, an area of the first page in the screen is reduced after the first floating window is moved to a preset position of the screen, and the first floating window is displayed on a newly arranged target area.

In an embodiment, the method may further include that:
responsive to reception of a first preset instruction for the first floating window in the target area, the first floating window is zoomed in, and background blurring is performed on areas other than the first floating window.

In an embodiment, the method may further include that:
displaying in a scrolling manner, responsive to reception of a window viewing instruction in the target area, floating windows held in the target area.

In an embodiment, the method may further include that:
responsive to reception of a third movement instruction for the first floating window within the target area, a display position of the first floating window in the target area is adjusted.

In an embodiment, the method may further include that:
responsive to reception of a fifth movement instruction for X other floating windows, the X floating windows are moved to the second page, and the X floating windows are displayed on the second page in an overlapped form; here, X is a positive integer no less than 2;
a third window number identifier is displayed on top of the X overlapped floating windows; and
responsive to reception of a fourth release instruction for the X overlapped floating windows, multimedia resources within the X floating windows are sent to the recipient.

According to a second aspect of the present invention, a device including the features of claim 7 is provided.

In an embodiment, the first movement module may be further configured to reduce, in a case that the first floating window is a first window to be held, an area of the first page in the screen after the first floating window is moved to a preset position of the screen, and display the first floating window on the newly arranged target area.

In an embodiment, the device may further include:
a third display module, configured to zoom in, responsive to reception of a first preset instruction for the first floating window within the target area, the first floating window, and perform background blurring on areas other than the first floating window.

In an embodiment, the device may further include:
a fourth display module, configured to display in a scrolling manner, responsive to reception of a window viewing instruction in the target area, floating windows held in the target area.

In an implementation, the device may further include:
a fifth display module, configured to adjust, responsive to reception of a third movement instruction for the first floating window within the target area, a display position of the first floating window in the target area.

In an implementation, the device may further include:
the second movement module, further configured to move, responsive to reception of a fifth movement instruction for X other floating windows, the X floating windows to the second page; here, X is a positive integer no less than 2;
a seventh display module, configured to display the X floating windows on the second page in an overlapped form, and display a third window number identifier on top of the X overlapped floating windows; and
the sending module, further configured to send, responsive to reception of a fourth release instruction for the X overlapped floating windows, multimedia resources within the X floating windows to the recipient.

According to a third aspect of the present invention, a device for sharing a multimedia resource is provided. The device includes that:
a processor; and
a memory configured to store instructions executable by the processor,
the processor is configured to implement the method for sharing the multimedia resource described in the first aspect.

According to a fourth aspect of the present invention, there is provided a storage medium having stored thereon computer program instructions that, when executed by a processor, implement the multimedia resource sharing method as described in the first aspect.

The technical solutions provided by the embodiments of the present disclosure may include the following beneficial effects.

In the embodiments of the present disclosure, responsive to detection of a preset trigger operation of a user on any one of multimedia resources on a first page, the multimedia resource may be set in a floating state, that is, a floating window that is convenient for the user to operate may be displayed, and the floating window displays the multimedia resource in a thumbnail form. In addition, the multimedia resource in a floating state can also respond to operations of the user such as movement and release, to support movement of the floating window to a target area of a screen and movement of the floating window from the target area to a second page to be sent to a recipient. Since the resource sharing mode is implemented based on a movable floating window, the operation mode is more direct, convenient and simple, the resource sharing efficiency can be significantly improved, the multimedia resource sharing mode is enriched, and the effect is better.

The above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate examples consistent with the present invention and, together with the description, serve to explain the principles of the present invention.
Fig. 1 illustrates a flowchart of a method for sharing a multimedia resource according to an embodiment.
Fig. 2 illustrates a flowchart of another method for sharing a multimedia resource according to an embodiment.
Fig. 3 illustrates a schematic diagram of a terminal display interface according to an embodiment.
Fig. 4 illustrates a schematic diagram of another terminal display interface according to an embodiment.
Fig. 5 illustrates a schematic diagram of another terminal display interface according to an embodiment.
Fig. 6 illustrates a schematic diagram of another terminal display interface according to an embodiment.
Fig. 7 illustrates a schematic diagram of another terminal display interface according to an embodiment.
Fig. 8 illustrates a schematic diagram of another terminal display interface according to an embodiment.
Fig. 9 illustrates a schematic diagram of another terminal display interface according to an embodiment.
Fig. 10 illustrates a schematic diagram of another terminal display interface according to an embodiment.
Fig. 11 illustrates a schematic diagram of another terminal display interface according to an embodiment.
Fig. 12 illustrates a schematic diagram of another terminal display interface according to an embodiment.
Fig. 13 illustrates a schematic diagram of another terminal display interface according to an embodiment.
Fig. 14 illustrates a schematic diagram of another terminal display interface according to an embodiment.
Fig. 15 illustrates a schematic diagram of another terminal display interface according to an embodiment.
Fig. 16 illustrates a block diagram of a device for sharing a multimedia resource according to an embodiment.
Fig. 17 illustrates a block diagram of another device for sharing a multimedia resource according to an embodiment.

### DETAILED DESCRIPTION

Reference is made in detail to aspects, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the present invention. Instead, they are merely examples of devices and methods consistent with aspects related to the present invention.

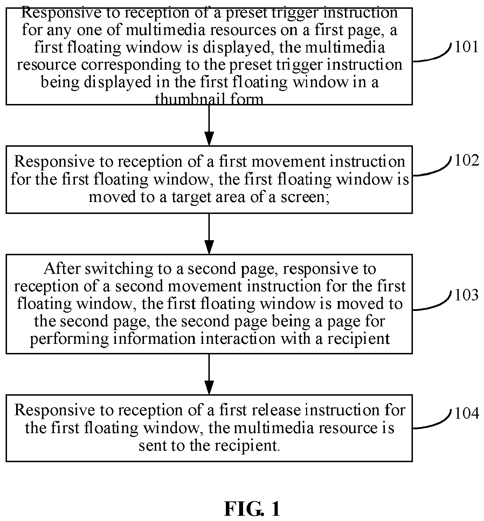

Fig. 1 illustrates a flowchart of a method for sharing a multimedia resource according to an embodiment. As illustrated in Fig. 1, the method is applied to a terminal, and includes the following operations.

At block 101, responsive to reception of a preset trigger instruction for any one of multimedia resources on a first page, a first floating window is displayed; here, the multimedia resource corresponding to the preset trigger instruction is displayed in the first floating window in a thumbnail form.

At block 102, responsive to reception of a first movement instruction for the first floating window, the first floating window is moved to a target area of a screen.

At block 103, after switching to a second page, responsive to reception of a second movement instruction for the first floating window, the first floating window is moved to the second page; here, the second page is a page for performing information interaction with a recipient. The recipient may be a sharing object or entity with which the multimedia resource is to be shared.

At block 104, responsive to reception of a first release instruction for the first floating window, the multimedia resource is sent to the recipient.

According to the method provided by the examples of the present disclosure, when a preset trigger operation of a user on any one of multimedia resources on a first page is detected, the multimedia resource may be set in a floating state, that is, a floating window that is convenient for the user to operate may be displayed, and the floating window displays the multimedia resource in a thumbnail form. In addition, the multimedia resource in the floating state can also respond to operations of the user such as movement and release operations, to support movement of the floating window to a target area of a screen and movement of the floating window from the target area to a second page to be sent to a recipient. Since the resource sharing mode is implemented based on a movable floating window, the operation mode is more direct, convenient and simple, and the resource sharing efficiency can be significantly improved, thereby enriching the multimedia resource sharing mode, resulting in a better effect, and avoiding or alleviating the problem of low sharing efficiency.

In an example, the operation of moving the first floating window to a target area of a screen includes that:
in a case that the first floating window is a first window to be held, an area of the first page in the screen is reduced after the first floating window is moved to a preset position of the screen, and the first floating window is displayed on the target area newly arranged. The target area is an area other than the reduced area of the first page, and is formed after the area of the first page in the screen is reduced.

The method further includes that:
responsive to reception of preset trigger instructions for M other multimedia resources, M floating windows are displayed in an overlapped form; here, M is a positive integer no less than 2;
a first window number identifier is displayed on top of the M overlapped floating windows; and
responsive to reception of a second release instruction for the M floating windows in the target area, the M floating windows are sequentially displayed in the target area.

In an example, the method further includes that:
responsive to reception of a first preset instruction for the first floating window within the target area, the first floating window is zoomed in, and background blurring is performed on areas other than the first floating window.

In an example, the method further includes that:
responsive to reception of a window viewing instruction within the target area, floating windows held in the target area are displayed in a scrolling manner.

In an example, the method further includes that:
responsive to reception of a third movement instruction for the first floating window within the target area, a display position of the first floating window in the target area is adjusted.

The method further includes that:
responsive to reception of a window overlapping instruction within the target area, N floating windows currently held in the target area are displayed in an overlapped form; here, N is a positive integer no less than 2;
a second window number identifier is displayed at a specified position within the target area;
responsive to reception of a fourth movement instruction for the N overlapped floating windows, the N overlapped floating windows are moved from the target area to the second page; and
responsive to reception of a third release instruction for the N overlapped floating windows, N multimedia resources currently stored or held within the target area are sent to the recipient.

In an example, the method further includes that:
responsive to reception of a fifth movement instruction for X other floating windows, the X floating windows are moved to the second page, and the X floating windows are displayed on the second page in an overlapped form; here, X is a positive integer no less than 2;
a third window number identifier is displayed on top of the X overlapped floating windows; and
responsive to reception of a fourth release instruction for the X overlapped floating windows, multimedia resources within the X overlapped floating windows are sent to the recipient.

All of the above technical solutions may be combined to form an embodiment of the present disclosure, and will not be further described herein.

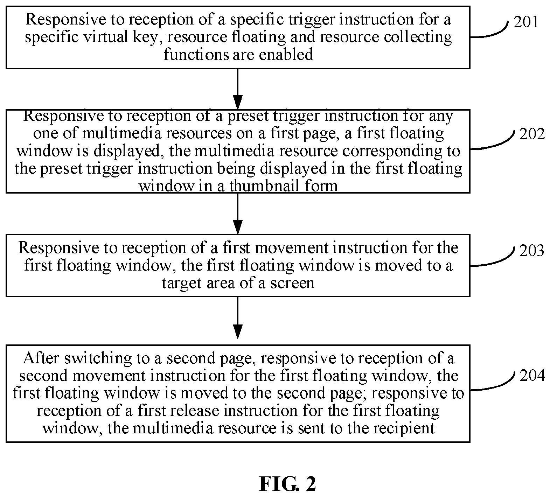

Fig. 2 illustrates a flowchart of another method for sharing a multimedia resource according to an embodiment. As illustrated in Fig. 2, the method is implemented by a terminal, and includes the following operations.

At block 201, responsive to reception of a specific trigger instruction for a specific virtual key, resource floating and resource collecting functions are enabled.

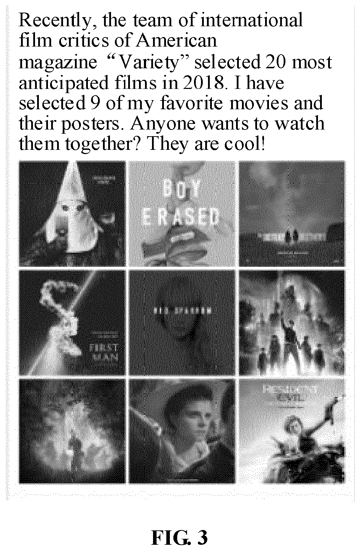

Referring to Fig. 3, during the process of browsing multimedia resources, users often need to share multimedia resources. For example, a passage or paragraph needs to be forwarded. In order to facilitate user operations, the examples of the present disclosure provide a fast and convenient multimedia resource sharing method that provides the multimedia resources, in a floating state and supports free movement of the multimedia resources by the users. The multimedia resources include, but are not limited to, text, links, files, pictures, and the like.

In the examples of the present disclosure, the specific virtual key is a switch that enables a global content floating function and supports the user to freely move the multimedia resource in the floating state. A display position of the specific virtual key may be a system setting interface, which is not specifically limited in the embodiments of the present disclosure. When the terminal receives a specific trigger instruction of a user for a specific virtual key, after the user turns on the switch, the terminal enters a content collection state. The specific trigger instruction may be a click operation on the specific virtual key, which is not specifically limited in the embodiments of the present disclosure.

At block 202, responsive to reception of a preset trigger instruction for any one of multimedia resources on a first page, a first floating window is displayed. The multimedia resource is displayed in the first floating window in a thumbnail form.

The first, second, third, fourth, etc. herein do not constitute a special limitation on multimedia resources or floating windows, which are only used to distinguish different multimedia resources or floating windows. The preset trigger instruction includes, but is not limited to, a long press instruction, a copy instruction, a download instruction and the like. The pressing duration corresponds to the long press instruction may be 1 second or 2 seconds, etc., which is not specifically limited in the examples of the present disclosure. In the examples of the present disclosure, when the user presses any multimedia resource, the multimedia resource may float and may be attached to the finger of the user. In another way, the long press operation triggers the display of the floating window.

For a text type multimedia resource, the thumbnail form may be a title of the passage or some words at the beginning of the passage; for a picture type multimedia resource, the thumbnail form may be a thumbnail of the picture.

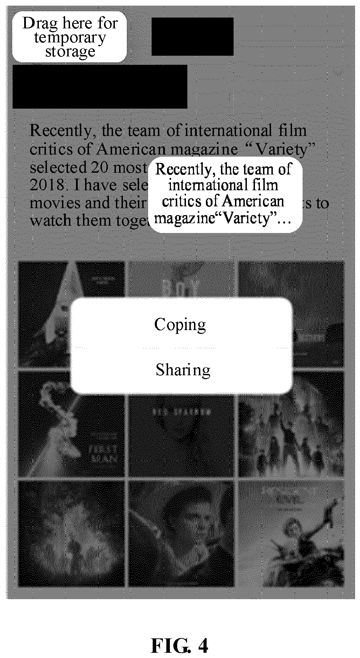

Referring to Fig. 4, if the terminal detects that the user has long pressed a text portion illustrated in the figure, the terminal will float the text, that is, the text is placed in a floating window, and the floating window is attached to the finger of the user, thereby facilitating user operation. Meanwhile, the first page will also synchronously display a resource collection container in a bring-to-front manner to facilitate the user to store or hold multimedia resources. The resource collection container may be displayed at any position of a display screen. For example, in order to prevent the resource collection container from excessively covering a lower part of the display page, the resource collection container may be displayed at a corner of the display screen, such as an upper left corner as illustrated in FIG. 4.

Here, the bring-to-front manner means that the resource collection container is displayed at the forefront when it is displayed in the foreground, that is, displayed at the front end of all the pages, or on the top of all the pages.

The resource collection container may display a prompt message prompting the user to temporarily store the multimedia resources, where the prompt message may be words, such as, "drag it here for temporary storage", and the examples of the present disclosure do not specifically limit.

At block 203, responsive to reception of a first movement instruction for the first floating window, the first floating window is moved to a target area of a screen.

For this operation, if the user presses and holds the first floating window and moves toward the location of the resource collection container, the terminal will place the first floating window in a selected state, and acquire a movement trajectory of the finger of the user in real time, so as to display the first floating window on the first page in real time.

In an example, the operation of moving the first floating window to the target area of the screen includes that: in a case that the first floating window is a first window to be held, an area of the first page in the screen is reduced after the first floating window is moved to a preset position of the screen, and the first floating window is displayed on the newly arranged target area.

The preset position of the screen is the location of the resource collection container. The examples of the present disclosure realize a display effect similar to the split screen. When the first floating window is moved to the location of the resource collection container, the terminal reduces the area of the first page displayed on a lower layer with respect to the first floating window in the screen or the display screen. For example, a currently displayed application interface is reduced to leave some space on the display screen, and the space is used to store the floating window moved or dragged by a user.

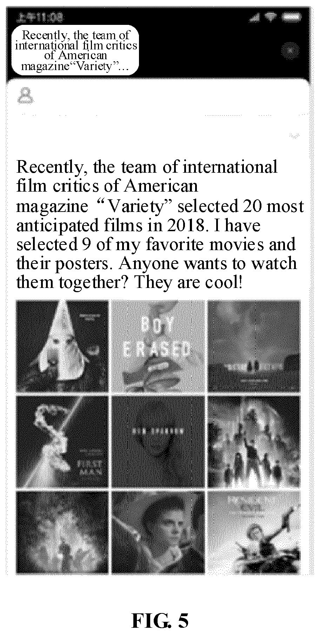

Referring to Fig. 5, in a case that the newly generated first floating window is a first window to be held, the terminal reduces an area of the first page in the display screen after the first floating window is moved to a preset position of the screen, and the first floating window is displayed on a newly arranged free area, where the free area is referred to herein as a target area.

The target area is usually located at a boundary position of the display screen, such as the top of the screen, the bottom of the screen, the left side of the screen, or the right side of the screen, which is not limited by the examples of the present disclosure. In Fig. 5, the target area appears at the top of the screen and is available for the user to store multiple floating windows.

At block 204, after switching to a second page, responsive to reception of a second movement instruction for the first floating window, the first floating window is moved to the second page; and responsive to reception of a first release instruction for the first floating window, the multimedia resource is sent to a recipient.

The second page is a page for performing information interaction with the recipient, that is, an application interface for sending a multimedia resource. In addition, if the second page is a chat interface of a social type application, the recipient is a friend of the local user.

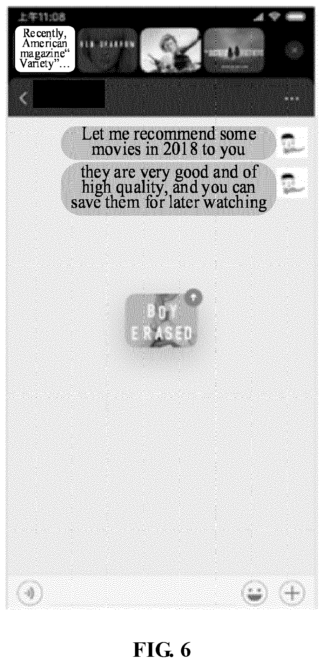

In the examples of the present disclosure, the multimedia resource in a floating state is a floating window, which supports the user to drag or move at will. If the user wants to send the first floating window displayed within the target area to others, after the first terminal is switched from the first page to the second page, as illustrated in Fig. 6, the user may press or hold the first floating window within the target area, and move the first floating window from the target area to the second page. After the user loosens the finger on the second page, the terminal receives a first release instruction for the first floating window, and sends the first multimedia resource to the recipient.

In addition, referring to Fig. 6, a sending prompt icon may also be displayed in the upper right corner of the first floating window to remind the user. A display position of the sending prompt icon may also be the upper left corner, the lower left corner, or the lower right corner, which is not specifically limited in the examples of the present disclosure.

According to the method provided by the examples of the present disclosure, when a preset trigger operation of a user on any one of multimedia resources on a first page is detected, the multimedia resource may be set in a floating state, that is, a floating window that is convenient for the user to operate may be displayed, and the floating window displays the multimedia resource in a thumbnail form. In addition, the multimedia resource in a floating state can also respond to operations of the user such as movement and release operation, to support movement of the floating window to a target area of a screen and movement of the floating window from the target area to a second page to be sent to a recipient. Since the resource sharing mode is implemented based on a movable floating window, the operation mode is more direct, convenient and simple, and the resource sharing efficiency can be significantly improved, thereby enriching the multimedia resource sharing mode, and resulting in a better effect.

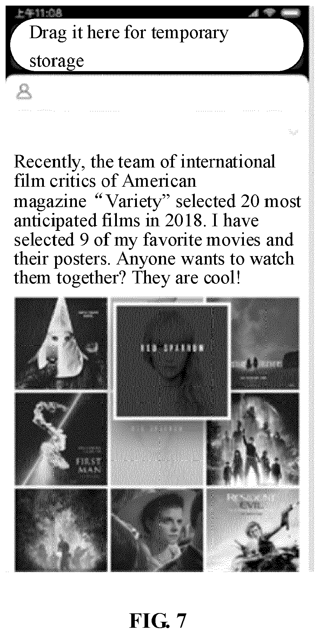

In an example, the resource collection container can store multiple multimedia resources. That is, the target area of the screen can store multiple floating windows. If the first floating window is the first stored window, the storing process for the non-first stored floating window is as follows: responsive to reception of a preset trigger instruction for a multimedia resource A, the target area is displayed in the form of the resource collection container. The floating window A displays the multimedia resource A in a thumbnail form. Compared with Fig. 5, when the finger of the user long presses the multimedia resource A, in addition to displaying the floating window A, the target area illustrated in Fig. 5 is also converted into the form of the resource collection container illustrated in Fig. 7 to guide the user to continue to store multimedia resources.

In an example, the embodiments of the present disclosure also support moving multiple floating windows to the target area of the screen at one time. When the terminal receives preset trigger instructions for M other multimedia resources, M floating windows are displayed in an overlapped form, M being a positive integer no less than 2. A first window number identifier is displayed on top of the M overlapped floating windows. The topmost one of the M overlapped floating windows may be a newly selected floating window, and the first window number identifier indicates a total number M of floating windows currently subjected to overlapping displaying.

In an example, when the M overlapped floating windows are moved to the location of the resource collection container, the resource collection container is switched to be displayed in the form of the target area. When a second release instruction for the M floating windows is received in the target area, the M floating windows are sequentially displayed on the target area. When the terminal receives a second release instruction for the overlapped M floating windows in the target area, the M overlapped floating windows are displayed in the target area in a chronological order. The chronological order may be an order of selection time from early to late, which is not specifically limited in the embodiments of the present disclosure.

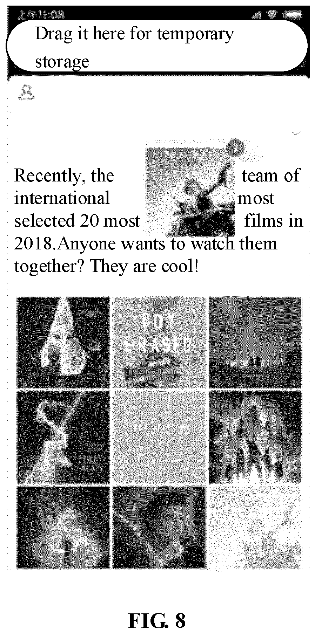

Referring to Fig. 8, in a case that the user presses a floating window with one finger and has not moved the floating window to the resource collection container, if the user continues to use another finger to long press another multimedia resource, another multimedia resource may be floated likewise and attached together with the former to achieve the gathering of the floating windows. As illustrated in Fig. 8, since two floating windows are currently attached, two floating windows are displayed in an overlapped form, and a total number of floating windows currently attached to the finger is displayed on the upper right corner of the topmost one of the overlapped the floating windows. The two floating windows are moved to the top of the screen so as to store or hold the two floating windows in the target area.

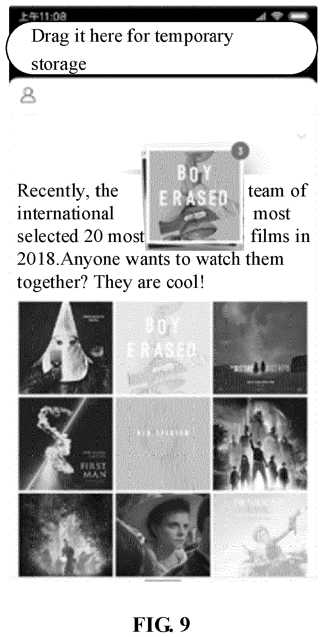

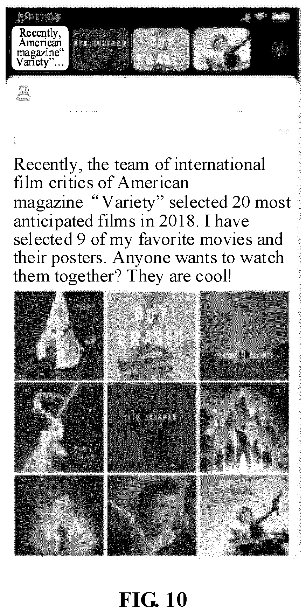

Referring to Fig. 9, the embodiments of the present disclosure further support the user to gather more floating windows under the finger. For example, three floating windows are gathered in Fig. 9, and accordingly, the total number of floating windows displayed also changes. Similarly, referring to Fig. 10, since three floating windows are gathered, after moving the overlapped floating windows to the target area, the three floating windows are sequentially displayed in the target area.

In addition, as can be seen from Fig. 10, the earliest stored floating window is arranged at the leftmost side of the target area, and the three floating windows stored together are sorted according to the selected order. That is, the order in which the floating windows are arranged in the target area is related to the position of the target area on the display screen and the time of storage (i.e. the time point at which the floating window is stored). If the storage times of any two floating windows are the same, the two floating windows are sorted according to the selected time (i.e. the time point at which the floating window is selected), which is not specifically limited in the examples of the present disclosure.

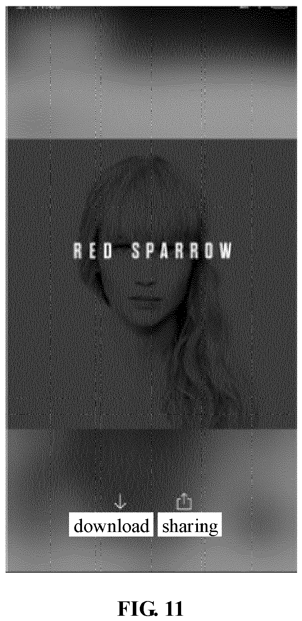

In an example, the embodiments of the present disclosure also support zooming in and viewing of any one of the floating windows displayed in the target area. For example, responsive to reception of a first preset instruction for the first floating window located within the target area, the first floating window is zoomed in, and background blurring is performed on areas other than the first floating window. The blurring process may be a Gaussian blurring process, which is not specifically limited in the examples of the present disclosure. Comparing Fig. 10 and Fig. 11, when the user clicks on the second floating window displayed in the top area of the screen (i.e. the target area) from left to right, the terminal zooms in the floating window, so that the user can view the details of the picture displayed by the floating window, and simultaneously, Gaussian blurring is performed on all backgrounds except the picture.

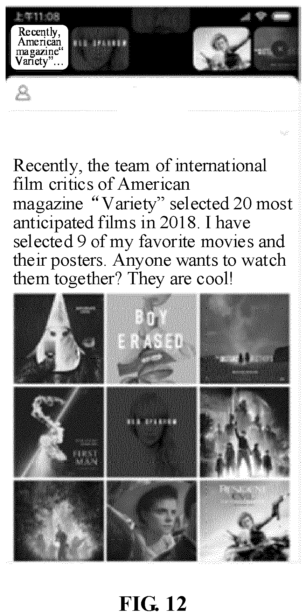

In an example, the examples of the present disclosure support deleting any one of the floating windows displayed in the target area. That is, responsive to reception of a deletion instruction for any one of the floating windows displayed in the target area, the corresponding floating window is deleted. The deletion instruction is generated based on a detected first sliding gesture. As illustrated in Fig. 12, the first sliding gesture may be a sliding gesture from bottom to top, which is not specifically limited in the embodiments of the present disclosure. Comparing Fig. 10 and Fig. 12, when the user presses the third floating window displayed in the target area form left to right and performs the sliding gesture from bottom to top, the terminal deletes that floating window.

In an example, multiple floating windows may be held within the target area. However, not all floating windows in the target area are displayed on the screen due to the size limitation of the display screen. For this reason, the examples of the present disclosure also support scrolling display of floating windows held in the target area. That is, responsive to reception of a window viewing instruction within the target area, the terminal displays in a scrolling manner, floating windows held in the target area. The window viewing instruction is generated based on a detected second sliding gesture. The second sliding gesture is adapted to the position of the target area. For example, if the target area is located at the top of the screen, the second sliding gesture may be a left-to-right sliding screen gesture or a right-to-left sliding screen gesture, which is not specifically limited in the examples of the present disclosure.

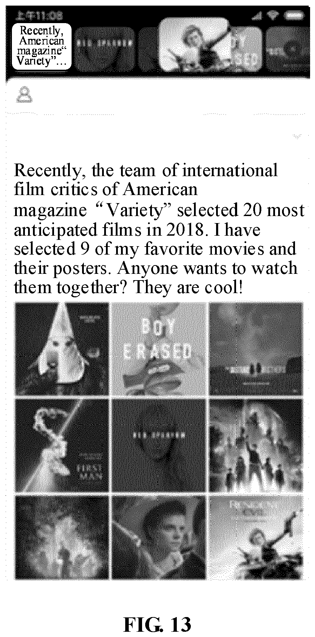

In an example, the examples of the present disclosure also support sorting adjustment of the positions of respective floating windows displayed in the target area. For example, responsive to reception of a third movement instruction for the first floating window within the target area, a display position of the first floating window in the target area is adjusted. When a movement instruction for the first floating window within the target area is received, the terminal acquires a distance between the first floating window and other floating windows currently displayed in the order, and adjusts a display position of the first floating window within the target area based on the distance. In another way, referring to Fig. 13, the user can adjust the display position of the floating window by pressing any one of the floating windows to move within the target area. For example, when the user presses and holds a floating window to be moved within the target area, if both a distance between the floating window after moving and one other floating window and a distance between the floating window after moving and another floating window are less than a fixed threshold, the floating window is inserted and displayed between those two floating windows.

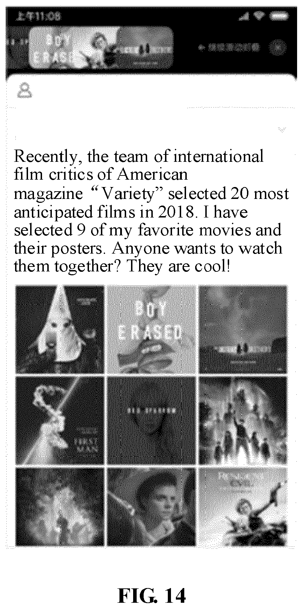

The present disclosure also supports overlapping of multiple floating windows within the target area. That is, responsive to reception of a window overlapping instruction within the target area, N floating windows currently held in the target area are displayed in an overlapped form, N being a positive integer no less than 2; and a second window number identifier is displayed at a specified position within the target area. The window overlapping instruction is generated based on a detected third sliding gesture or a two-finger pinching gesture. The third sliding gesture is adapted to the position of the target area. If the target area is located at the top of the screen, the third sliding gesture may be a fast right-to-left sliding screen gesture, and the specified position may be the upper right corner of the target area, which is not specifically limited in the embodiments of the present disclosure. Referring to Fig. 14, a right-to-left sliding operation or a two-finger pinching operation is performed in the target area located at the top of the screen, and multiple floating windows held in the target area may be overlapped. For example, the multiple floating windows in the target area may be partially overlapped, such that the user is able to view the content of the floating windows while more floating windows may be held and viewable in the target area.

The N floating windows in an overlapped state are moved together to the second page of the target application and all are sent. That is, responsive to reception of a fourth movement instruction for N overlapped floating windows, the N overlapped floating windows are moved from the target area to the second page; and responsive to reception of a third release instruction for the N overlapped floating windows, N multimedia resources currently stored within the target area are sent to the recipient.

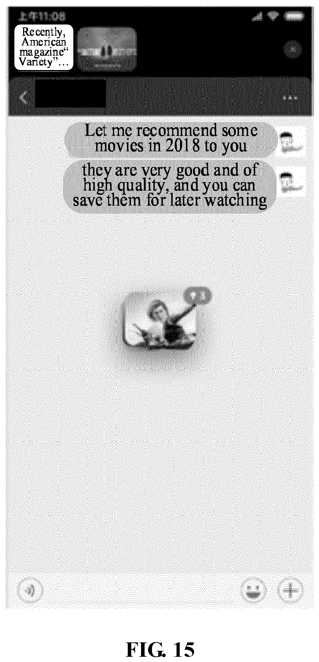

In an example, referring to Fig. 15, after the user moves a floating window to the second page, if the user does not release the finger, but uses other fingers to continue to select other floating windows, multiple floating windows can be gathered under the finger, that is, the embodiments of the present disclosure support multi-selection sending. In another way, responsive to reception of a fifth movement instruction for X other floating windows, the X floating windows are moved to the second page, and the X floating windows are displayed on the second page in an overlapped form, X being a positive integer no less than 2. A third window number identifier and a sending prompt identifier are displayed on top of the X overlapped floating windows; and responsive to reception of a fourth release instruction for the X overlapped floating windows, multimedia resources within the X floating windows are sent to the recipient.

In summary, according to the examples of the present disclosure, a multimedia resource can be stored in a small space at the edge of a screen through a system-level resource capture capability, and a user can move and store the multimedia resource in a floating state at will. Such gestures of moving and sending are very in line with the user's intuition and the content is completely visible, so the whole process is controlled by the user, the resource sharing efficiency is high, and the user experience is good.

In detail, for a scenario in which a resource needs to be shared quickly or multiple resources need to be shared, not only the floating and moving-based resource sharing mode provided by the embodiments of the present disclosure can greatly improve the sharing efficiency, but also the user directly manipulates the resource itself to simulate the real life scenario. The interaction mode is very easy to learn and easy to remember. In addition, such an interaction mode can assist in popularizing gesture interactions, which will help the product to develop in a direction that is closer to the user's intuition and more in line with a natural interaction scenario.

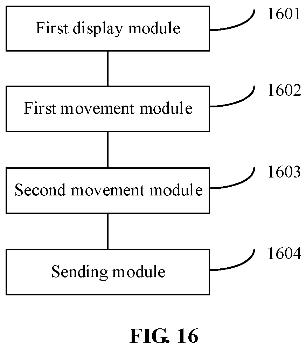

Fig. 16 illustrates a block diagram of a device for sharing a multimedia resource according to an embodiment. Referring to Fig. 16, the device includes a first display module 1601, a first movement module 1602, a second movement module 1603, and a sending module 1604.

The first display module 1601 is configured to display, responsive to reception of a preset trigger instruction for any one of multimedia resources on a first page, a first floating window. The multimedia resource corresponding to the preset trigger instruction is displayed in the first floating window in a thumbnail form.

The first movement module 1602 is configured to move, responsive to reception of a first movement instruction for the first floating window, the first floating window to a target area of a screen.

The second movement module 1603 is configured to receive, after switching to a second page, a second movement instruction for the first floating window, and move the first floating window to the second page, the second page being a page for performing information interaction with a recipient.

The sending module 1604 is configured to send, responsive to reception of a first release instruction for the first floating window, the multimedia resource to the recipient.

According to the device provided by the embodiments of the present disclosure, responsive to reception of a preset trigger operation of a user on any one of multimedia resources on a first page is detected, the multimedia resource may be set in a floating state, that is, a floating window that is convenient for the user to operate may be displayed, and the floating window displays the multimedia resource in a thumbnail form. In addition, the multimedia resource in a floating state can also respond to operations of the user such as movement and release operations, to support movement of the floating window to a target area of a screen and movement of the floating window from the target area to a second page to be sent to a recipient. Since the resource sharing mode is implemented based on a movable floating window, the operation mode is more direct, convenient and simple, and the resource sharing efficiency can be significantly improved, thereby enriching the multimedia resource sharing mode, and resulting in a better effect.

In an example, the first movement module is further configured to reduce, in a case that the first floating window is a first window to be held, an area of the first page in the screen after the first floating window is moved to a preset position of the screen, and display the first floating window on the newly arranged target area.

The device further includes a second display module.

The second display module is configured to: display, responsive to reception of preset trigger instructions for M other multimedia resources, M floating windows in an overlapped form, M being a positive integer no less than 2; display a first window number identifier on top of the M overlapped floating windows; and sequentially display, responsive to reception of a second release instruction for the M floating windows in the target area, the M floating windows in the target area.

In an example, the device further includes a third display module.

The third display module is configured to zoom in, responsive to reception of a first preset instruction for the first floating window within the target area, the first floating window, and perform background blurring on areas other than the first floating window.

In an example, the device further includes a fourth display module.

The fourth display module is configured to display in a scrolling manner, responsive to reception of a window viewing instruction in the target area, floating windows held in the target area.

In an example, the device further includes a fifth display module.

The fifth display module is configured to adjust, responsive to reception of a third movement instruction for the first floating window within the target area, a display position of the first floating window in the target area.

The device further includes a sixth display module.

The sixth display module is configured to: perform, responsive to reception of a window overlapping instruction within the target area, N floating windows currently held in the target area are displayed in an overlapped form, N being a positive integer no less than 2; and display a second window number identifier at a specified position within the target area.

The second movement module is further configured to move, responsive to reception of a fourth movement instruction for the N overlapped floating windows, the N overlapped floating windows from the target area to the second page.

The sending module is further configured to send, responsive to reception of a third release instruction for the N overlapped floating windows, N multimedia resources currently stored within the target area to the recipient.

In an example, the device further includes a seventh display module.

The second movement module is further configured to move, responsive to reception of a fifth movement instruction for X other floating windows, the X floating windows to the second page. X being a positive integer no less than 2.

The seventh display module is configured to display the X floating windows on the second page in an overlapped form, and display a third window number identifier on top of the X overlapped floating windows.

The sending module is further configured to send, responsive to reception of a fourth release instruction for the X overlapped floating windows, multimedia resources within the X floating windows to the recipient.

All of the above technical solutions may be combined to form an embodiment of the present disclosure, and will not be further described herein.

With regard to the device in the above embodiments, the specific manner in which the respective modules perform the operations has been described in detail in the embodiment relating to the method, and will not be explained in detail herein.

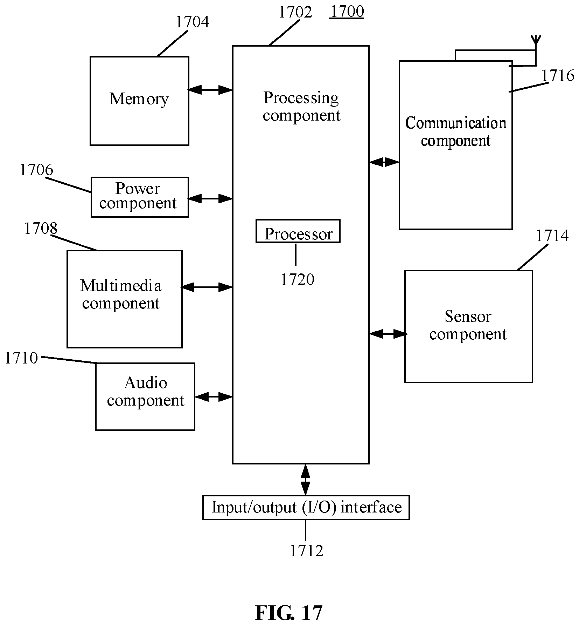

Fig. 17 illustrates a block diagram of a multimedia resource sharing device 1700 according to an embodiment. For example, the device 1700 may be a mobile phone, a computer, a digital broadcast terminal, a messaging device, a gaming console, a tablet, a medical device, exercise equipment, a personal digital assistant, and the like.

Referring to Fig. 17, the device 1700 includes one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 includes one or more processors 1720 to execute instructions to perform all or part of the steps in the above described methods. Moreover, the processing component 1702 may include one or more modules which facilitate the interaction between the processing component 1702 and other components. For example, the processing component 1702 may include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the device 1700. The power component 1706 may include a power management system, one or more power sources, and any other components associated with the generation, management, and distribution of power in the device 1700.

The multimedia component 1708 includes a screen providing an output interface between the device 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and the rear camera may receive an external multimedia datum while the device 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone ("MIC") configured to receive an external audio signal when the device 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the device 1700. For example, the sensor component 1714 may detect an open/closed status of the device 1700, relative positioning of components, e.g., the display and the keypad, of the device 1700, a change in position of the device 1700 or a component of the device 1700, a presence or absence of user contact with the device 1700, an orientation or an acceleration/deceleration of the device 1700, and a change in temperature of the device 1700. The sensor component 1714 may include a proximity sensor configured to detect the presence of nearby objects without any physical contact. The sensor component 1714 may also include a light sensor, such as a complementary metal oxide semiconductor (CMOS) or charge-coupled device (CCD) image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the device 1700 and other devices. The device 1700 can access a wireless network based on a communication standard, such as WiFi, 2G, or 3G, or a combination thereof. In one example, the communication component 1716 receives a broadcast signal or broadcast associated information from an external broadcast management system via a broadcast channel. In one example, the communication component 1716 further includes a near field communication (NFC) module to facilitate short-range communications.

In examples, the device 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above multimedia resource sharing method.

There is also provided a non-transitory computer readable storage medium including instructions, such as included in the memory 1704, executable by the processor 1720 in the device 1700, for performing the above method. For example, the non-transitory computer-readable storage medium may be a ROM, a random access memory (RAM), a compact disc read-only memory (CD-ROM), a magnetic tape, a floppy disc, an optical data storage device, and the like.

A non-transitory computer-readable storage medium is provided. When an instruction in the storage medium is executed by a processor of the device 1700, the device 1700 is enabled to perform the above multimedia resource sharing method.

It is intended that the specification and examples be considered as exemplary only, with a true scope of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for sharing a multimedia resource, comprising:
displaying (101), responsive to reception of a preset trigger instruction input by a user for any one of multimedia resources on a first application interface, a first floating window, wherein the multimedia resource corresponding to the preset trigger instruction is displayed in the first floating window in a thumbnail form;
moving (102), responsive to reception of a first movement instruction input by the user for the first floating window, the first floating window to a target area of a screen;
after switching to a second application interface, moving (103), responsive to reception of a second movement instruction input by the user for the first floating window within the target area of the screen, the first floating window within the target area of the screen to the second application interface, wherein the second application interface is an application interface for performing information interaction with a recipient; and
sending (104), responsive to reception of a first release instruction input by the user for the first floating window within the second application interface, the multimedia resource to the recipient; the method further comprising:
displaying, responsive to reception of preset trigger instructions for N other multimedia resources, N floating windows in an overlapped form, wherein N is a positive integer no less than 2;
sequentially displaying, responsive to reception of a second release instruction for the N floating windows in the target area, the N floating windows in the target area;
displaying in an overlapped form, responsive to reception of a window overlapping instruction input by the user in the target area, the N floating windows held in the target area;
displaying a first window number identifier at a specified position in the target area;
moving, responsive to reception of a third movement instruction input by the user for the N overlapped floating windows, the N overlapped floating windows from the target area to the second application interface; and
sending, responsive to reception of a third release instruction input by the user for the N overlapped floating windows, N multimedia resources stored within the target area to the recipient together.

2. The method of claim 1, wherein moving the first floating window to the target area of the screen comprises:
in a case that the first floating window is a first window to be held, reducing an area of the first application interface in the screen after the first floating window is moved to a preset position of the screen, and displaying the first floating window on the target area which is newly formed.

3. The method of any one of the preceding claims, further comprising:
zooming in, responsive to reception of a first preset instruction for the first floating window in the target area, the first floating window, and performing background blurring on areas other than the first floating window.

4. The method of any one of the preceding claims, further comprising:
displaying in a scrolling manner, responsive to reception of a window viewing instruction in the target area, floating windows held within the target area.

5. The method of any one of the preceding claims, further comprising:
adjusting, responsive to reception of a fourth movement instruction for the first floating window in the target area, a display position of the first floating window in the target area.

6. The method of any one of the preceding claims, further comprising:
moving, responsive to reception of a fifth movement instruction input by the user for X other floating windows held in the target area, the X floating windows to the second application interface, and displaying the X floating windows on the second application interface in an overlapped form, wherein X is a positive integer no less than 2;
displaying a third window number identifier on top of the X overlapped floating windows; and
sending, responsive to reception of a fourth release instruction input by the user for the X overlapped floating windows, multimedia resources within the X overlapped floating windows to the recipient.

7. A device for sharing a multimedia resource, comprising:
a first display module (1601), configured to display, responsive to reception of a preset trigger instruction input by a user for any one of multimedia resources on a first application interface, a first floating window, wherein the multimedia resource corresponding to the preset trigger instruction is displayed in the first floating window in a thumbnail form;
a first movement module (1602), configured to move, responsive to reception of a first movement instruction input by the user for the first floating window, the first floating window to a target area of a screen;
a second movement module (1603), configured to move, after switching to a second application interface, responsive to reception of a second movement instruction input by the user for the first floating window within the target area of the screen, the first floating window within the target area of the screen to the second application interface, wherein the second application interface is an application interface for performing information interaction with a recipient;
a sending module (1604), configured to send, responsive to reception of a first release instruction input by the user for the first floating window within the second application interface, the multimedia resource to the recipient;
a second display module, configured to display, responsive to reception of preset trigger instructions for N other multimedia resources, N floating windows in an overlapped form, wherein N is a positive integer no less than 2, and sequentially display, responsive to reception of a second release instruction for the N floating windows in the target area, the N floating windows in the target area;
a third display module, configured to display, in an overlapped form, responsive to reception of a window overlapping instruction within the target area, N floating windows held in the target area, and display a first window number identifier at a specified position within the target area;
the second movement module (1603) is further configured to move, responsive to reception of a third movement instruction for the N overlapped floating windows, the N overlapped floating windows from the target area to the second application interface;
and the sending module (1604) is further configured to send, responsive to reception of a third release instruction for the N overlapped floating windows, N multimedia resources stored within the target area to the recipient together.

8. The device of claim 7, wherein the first movement module (1602) is further configured to:
in a case that the first floating window is a first window to be held, reduce an area of the first application interface in the screen after the first floating window is moved to a preset position of the screen, and display the first floating window on the target area which is newly formed.

9. The device of claim 7 or 8, wherein the device further comprises:
a fourth display module, configured to zoom in, responsive to reception of a first preset instruction for the first floating window in the target area, the first floating window, and perform background blurring on areas other than the first floating window.

10. The device of any one of claims 7 to 9, wherein the device further comprises:
a fifth display module, configured to display in a scrolling manner, responsive to reception of a window viewing instruction in the target area, floating windows held within the target area.

11. A device for sharing a multimedia resource, **characterized by** comprising:
a processor (1720); and
a memory (1704) configured to store instructions executable by the processor,
wherein the processor is configured to implement the method for sharing the multimedia resource of any one of claims 1-6.

12. A storage medium having stored thereon computer program instructions that, when executed by a processor, implement the method for sharing the multimedia resource of any one of claims 1 to 6.

## Patentansprüche

1. Verfahren zu dem gemeinsamen Nutzen einer Multimedia-Ressource, umfassend:
Anzeigen (101) eines ersten schwebenden Fensters in Reaktion auf den Empfang eines voreingestellten Auslösebefehls, der von einem Nutzer für eine beliebige der Multimedia-Ressourcen auf einer ersten Anwendungsschnittstelle eingegeben wurde, wobei die dem voreingestellten Auslösebefehl entsprechende Multimedia-Ressource in dem ersten schwebenden Fenster in Form von Miniaturbildern angezeigt wird;
Verschieben (102) des ersten schwebenden Fensters in einen Zielbereich eines Bildschirms als Reaktion auf den Empfang einer ersten Verschiebeanweisung, die von dem Nutzer für das erste schwebende Fenster eingegeben wurde;
nach dem Wechsel zu einer zweiten Anwendungsschnittstelle, Verschieben (103) des ersten schwebenden Fensters innerhalb des Zielbereichs des Bildschirms zu der zweiten Anwendungsschnittstelle, in Reaktion auf den Empfang einer zweiten Verschiebeanweisung, die von dem Nutzer für das erste schwebende Fenster innerhalb des Zielbereichs des Bildschirms eingegeben wurde, wobei die zweite Anwendungsschnittstelle eine Anwendungsschnittstelle zu dem Durchführen einer Informationsinteraktion mit einem Empfänger ist; und
Senden (104) der Multimedia-Ressource an den Empfänger als Reaktion auf den Empfang einer ersten Freigabeanweisung, die von dem Nutzer für das erste schwebende Fenster innerhalb der zweiten Anwendungsschnittstelle eingegeben wurde; wobei das Verfahren ferner Folgendes umfasst:
Anzeigen von N schwebenden Fenstern in überlappender Form als Reaktion auf den Empfang voreingestellter Auslösebefehle für N weitere Multimedia-Ressourcen, wobei N eine positive ganze Zahl von mindestens 2 ist;
sequentielles Anzeigen der N schwebenden Fenster in dem Zielbereich als Reaktion auf den Empfang einer zweiten Freigabeanweisung für die N schwebenden Fenster in dem Zielbereich;
Anzeigen der N schwebenden Fenster in dem Zielbereich in überlappender Form als Reaktion auf den Empfang einer Anweisung zu der Fensterüberlappung, die von dem Nutzer in dem Zielbereich eingegeben wurde;
Anzeigen einer Kennung für eine erste Fensterzahl an einer bestimmten Position in dem Zielbereich;
Verschieben der N überlappenden schwebenden Fenster von dem Zielbereich zu der zweiten Anwendungsschnittstelle als Reaktion auf den Empfang einer dritten Verschiebeanweisung, die von dem Nutzer für die N überlappenden schwebenden Fenster eingegeben wurde; und
gemeinsames Senden von N Multimedia-Ressourcen, die in dem Zielbereich gespeichert sind, an den Empfänger als Reaktion auf den Empfang einer dritten Freigabeanweisung, die von dem Nutzer für die N überlappenden schwebenden Fenster eingegeben wurde.

2. Verfahren nach Anspruch 1, wobei das Verschieben des ersten schwebenden Fensters in den Zielbereich des Bildschirms Folgendes umfasst:
in einem Fall, in dem das erste schwebende Fenster ein erstes Fenster ist, das gehalten werden soll, Verkleinern eines Bereichs der ersten Anwendungsschnittstelle auf dem Bildschirm, nachdem das erste schwebende Fenster in eine voreingestellte Position des Bildschirms verschoben wurde, und Anzeigen des ersten schwebenden Fensters auf dem neu gebildeten Zielbereich.

3. Verfahren nach einem der vorhergehenden Ansprüche, ferner umfassend:
Hineinzoomen, als Reaktion auf den Empfang einer ersten voreingestellten Anweisung für das erste schwebende Fenster in dem Zielbereich, in das erste schwebende Fenster und Durchführen einer Weichzeichnung des Hintergrunds in anderen Bereichen als dem ersten schwebenden Fenster.

4. Verfahren nach einem der vorhergehenden Ansprüche, das ferner umfasst:
Anzeigen in einer Bildlaufweise, schwebender Fenster, die in dem Zielbereich gehalten werden, als Reaktion auf den Empfang einer Anweisung zu dem Betrachten von Fenstern in dem Zielbereich.

5. Verfahren nach einem der vorhergehenden Ansprüche, ferner umfassend:
Anpassen einer Anzeigeposition des ersten schwebenden Fensters in dem Zielbereich als Reaktion auf den Empfang einer vierten Verschiebeanweisung für das erste schwebende Fenster in dem Zielbereich.

6. Verfahren nach einem der vorhergehenden Ansprüche, ferner umfassend:
Verschieben von X anderen schwebenden Fenstern, die in dem Zielbereich gehalten werden, zu der zweiten Anwendungsschnittstelle als Reaktion auf den Empfang einer fünften Verschiebeanweisung, die von dem Nutzer eingegeben wird, und Anzeigen der X schwebenden Fenster auf der zweiten Anwendungsschnittstelle in überlappender Form, wobei X eine positive ganze Zahl von nicht weniger als 2 ist;
Anzeigen einer Kennung für eine dritte Fensterzahl über den X überlappend angeordneten schwebenden Fenstern; und
Senden von Multimedia-Ressourcen innerhalb der X überlappenden schwebenden Fenster an den Empfänger als Reaktion auf den Empfang einer vierten Freigabeanweisung, die von dem Nutzer für die X überlappenden schwebenden Fenster eingegeben wurde.

7. Vorrichtung zu dem gemeinsamen Nutzen einer Multimedia-Ressource, umfassend:
ein erstes Anzeigemodul (1601), das dazu konfiguriert ist, als Reaktion auf den Empfang eines voreingestellten Auslösebefehls, der von einem Nutzer für eine beliebige Multimediaressource auf einer ersten Anwendungsschnittstelle eingegeben wurde, ein erstes schwebendes Fenster anzuzeigen, wobei die dem voreingestellten Auslösebefehl entsprechende Multimediaressource in dem ersten schwebenden Fenster in Form einer Miniaturansicht angezeigt wird;
ein erstes Verschiebemodul (1602), das dazu konfiguriert ist, als Reaktion auf den Empfang einer ersten Verschiebeanweisung, die von dem Nutzer für das erste schwebende Fenster eingegeben wurde, das erste schwebende Fenster zu einem Zielbereich eines Bildschirms zu verschieben;
ein zweites Verschiebemodul (1603), das dazu konfiguriert ist, nach dem Umschalten auf eine zweite Anwendungsschnittstelle als Reaktion auf den Empfang einer zweiten Verschiebeanweisung, die von dem Nutzer für das erste schwebende Fenster innerhalb des Zielbereichs des Bildschirms eingegeben wurde, das erste schwebende Fenster innerhalb des Zielbereichs des Bildschirms zu der zweiten Anwendungsschnittstelle zu verschieben, wobei die zweite Anwendungsschnittstelle eine Anwendungsschnittstelle zu dem Durchführen einer Informationsinteraktion mit einem Empfänger ist;
ein Sendemodul (1604), das dazu konfiguriert ist, als Reaktion auf den Empfang einer ersten Freigabeanweisung, die von dem Nutzer für das erste schwebende Fenster innerhalb der zweiten Anwendungsschnittstelle eingegeben wurde, die Multimedia-Ressource an den Empfänger zu senden;
ein zweites Anzeigemodul, das dazu konfiguriert ist, als Reaktion auf den Empfang voreingestellter Auslösebefehle für N weitere Multimedia-Ressourcen N schwebende Fenster in überlappender Form anzuzeigen, wobei N eine positive ganze Zahl von nicht weniger als 2 ist, und als Reaktion auf den Empfang eines zweiten Freigabebefehls für die N schwebenden Fenster in dem Zielbereich die N schwebenden Fenster in dem Zielbereich sequentiell anzuzeigen;
ein drittes Anzeigemodul, das dazu konfiguriert ist, als Reaktion auf den Empfang einer Anweisung zu der Fensterüberlappung innerhalb des Zielbereichs N schwebende Fenster, die in dem Zielbereich gehalten werden, in überlappender Form anzuzeigen und eine Kennung für eine erste Fensterzahl an einer bestimmten Position innerhalb des Zielbereichs anzuzeigen;
wobei das zweite Verschiebemodul (1603) ferner dazu konfiguriert ist, als Reaktion auf den Empfang einer dritten Verschiebeanweisung für die N überlappenden schwebenden Fenster die N überlappenden schwebenden Fenster aus dem Zielbereich zu der zweiten Anwendungsschnittstelle zu verschieben;
und wobei das Sendemodul (1604) ferner dazu konfiguriert ist, als Reaktion auf den Empfang einer dritten Freigabeanweisung für die N überlappenden schwebenden Fenster N Multimedia-Ressourcen, die in dem Zielbereich gespeichert sind, zusammen an den Empfänger zu senden.

8. Vorrichtung nach Anspruch 7, wobei das erste Verschiebungsmodul (1602) ferner dazu konfiguriert ist:
in einem Fall, in dem das erste schwebende Fenster ein erstes Fenster ist, das gehalten werden soll, einen Bereich der ersten Anwendungsschnittstelle auf dem Bildschirm zu verkleinern, nachdem das erste schwebende Fenster zu einer voreingestellten Position des Bildschirms bewegt wurde, und das erste schwebende Fenster auf dem neu gebildeten Zielbereich anzuzeigen.

9. Vorrichtung nach Anspruch 7 oder 8, wobei die Vorrichtung ferner Folgendes umfasst:
ein viertes Anzeigemodul, das dazu konfiguriert ist, als Reaktion auf den Empfang einer ersten voreingestellten Anweisung für das erste schwebende Fenster in dem Zielbereich in das erste schwebende Fenster hineinzuzoomen und in anderen Bereichen als dem ersten schwebenden Fenster ein Weichzeichnen des Hintergrunds durchzuführen.

10. Vorrichtung nach einem der Ansprüche 7 bis 9, wobei die Vorrichtung ferner Folgendes umfasst:
ein fünftes Anzeigemodul, das dazu konfiguriert ist, als Reaktion auf den Empfang einer Anweisung zu dem Betrachten von Fenstern in dem Zielbereich, schwebende Fenster, die in dem Zielbereich gehalten werden, in einer Bildlaufweise anzuzeigen.

11. Vorrichtung zu dem gemeinsamen Nutzen einer Multimedia-Ressource, **dadurch gekennzeichnet, dass** sie Folgendes umfasst:
einen Prozessor (1720); und
einen Speicher (1704), der dazu konfiguriert ist, Anweisungen zu speichern, die von dem Prozessor ausgeführt werden können,
wobei der Prozessor dazu konfiguriert ist, das Verfahren zu dem gemeinsamen Nutzen der Multimedia-Ressource gemäß einem der Ansprüche 1 bis 6 zu implementieren.

12. Speichermedium mit darauf gespeicherten Computerprogrammbefehlen, die bei Ausführung durch einen Prozessor das Verfahren zu dem gemeinsamen Nutzen der Multimedia-Ressource gemäß einem der Ansprüche 1 bis 6 implementieren.

## Revendications

1. Procédé de partage d'une ressource multimédia, comprenant :
afficher (101), en réponse à la réception d'une entrée d'instruction de déclenchement prédéfinie par un utilisateur pour l'une quelconque des ressources multimédias sur une première interface d'application, une première fenêtre flottante, dans lequel la ressource multimédia correspondant à l'instruction de déclenchement prédéfinie est affichée dans la première fenêtre flottante sous la forme d'une vignette ;
déplacer (102), en réponse à la réception d'une première instruction de déplacement entrée par l'utilisateur pour la première fenêtre flottante, la première fenêtre flottante vers une zone cible d'un écran ;
après avoir basculé vers une deuxième interface d'application, déplacer (103), en réponse à la réception d'une deuxième instruction de déplacement entrée par l'utilisateur pour la première fenêtre flottante dans la zone cible de l'écran, la première fenêtre flottante dans la zone cible de l'écran vers la deuxième interface d'application, dans lequel la deuxième interface d'application est une interface d'application pour effectuer une interaction d'information avec un destinataire ; et
envoyer (104), en réponse à la réception d'une première entrée d'instruction de libération par l'utilisateur pour la première fenêtre flottante à l'intérieur de la deuxième interface d'application, la ressource multimédia au destinataire ; le procédé comprend en outre :
afficher, en réponse à la réception d'instructions de déclenchement prédéfinies pour N autres ressources multimédias, N fenêtres flottantes sous une forme superposée, dans lequel N est un nombre entier positif non inférieur à 2 ;
afficher séquentiellement, en réponse à la réception d'une deuxième instruction de libération pour les N fenêtres flottantes dans la zone cible, les N fenêtres flottantes dans la zone cible ;
afficher sous une forme superposée, en réponse à la réception d'une instruction de superposition de fenêtre entrée par l'utilisateur dans la zone cible, les N fenêtres flottantes tenues dans la zone cible ;
afficher un premier identificateur de numéro de fenêtre à une position spécifiée dans la zone cible ;
déplacer, en réponse à la réception d'une troisième entrée d'instruction de déplacement par l'utilisateur pour les N fenêtres flottantes superposées, les N fenêtres flottantes superposées de la zone cible vers la deuxième interface d'application ; et
envoyer, en réponse à la réception d'une troisième entrée d'instruction de libération par l'utilisateur pour les N fenêtres flottantes superposées, les N ressources multimédias stockées dans la zone cible au destinataire ensemble.

2. Le procédé de la revendication 1, dans lequel déplacer la première fenêtre flottante dans la zone cible de l'écran comprend :
dans un cas où la première fenêtre flottante est une première fenêtre à tenir, réduire une zone de la première interface d'application dans l'écran après que la première fenêtre flottante est déplacée vers une position prédéfinie de l'écran, et afficher la première fenêtre flottante sur la zone cible nouvellement formée.

3. Le procédé de l'une quelconque des revendications précédentes, comprenant en outre :
zoomer, en réponse à la réception d'une première instruction prédéfinie pour la première fenêtre flottante dans la zone cible, la première fenêtre flottante, et effectuer un flou d'arrière-plan sur les zones autres que la première fenêtre flottante.

4. Le procédé de l'une quelconque des revendications précédentes, comprenant en outre :
afficher de manière défilante, en réponse à la réception d'une instruction de visualisation de fenêtre dans la zone cible, les fenêtres flottantes tenues dans la zone cible.

5. Le procédé de l'une quelconque des revendications précédentes, comprenant en outre :
ajuster, en réponse à la réception d'une quatrième instruction de déplacement de la première fenêtre flottante dans la zone cible, une position d'affichage de la première fenêtre flottante dans la zone cible.

6. Le procédé de l'une quelconque des revendications précédentes, comprenant en outre :
déplacer, en réponse à la réception d'une cinquième entrée d'instruction de déplacement par l'utilisateur pour X autres fenêtres flottantes tenues dans la zone cible, les X fenêtres flottantes vers la deuxième interface d'application, et afficher les X fenêtres flottantes sur la deuxième interface d'application sous une forme superposée, dans lequel X est un nombre entier positif non inférieur à 2 ;
afficher un troisième identificateur de numéro de fenêtre au-dessus des X fenêtres flottantes superposées ; et
envoyer, en réponse à la réception d'une quatrième entrée d'instruction de libération par l'utilisateur pour les X fenêtres flottantes superposées, des ressources multimédias dans les X fenêtres flottantes superposées au destinataire.

7. Dispositif de partage d'une ressource multimédia, comprenant
un premier module d'affichage (1601), configuré pour afficher, en réponse à la réception d'une entrée d'instruction de déclenchement prédéfinie par un utilisateur pour l'une quelconque des ressources multimédias sur une première interface d'application, une première fenêtre flottante, dans lequel la ressource multimédia correspondant à l'instruction de déclenchement prédéfinie est affichée dans la première fenêtre flottante sous la forme d'une vignette ;
un premier module de déplacement (1602), configuré pour déplacer, en réponse à la réception d'une première entrée d'instruction de déplacement par l'utilisateur pour la première fenêtre flottante, la première fenêtre flottante vers une zone cible d'un écran ;
un deuxième module de déplacement (1603), configuré pour déplacer, après avoir basculé vers une deuxième interface d'application, en réponse à la réception d'une deuxième entrée d'instruction de déplacement par l'utilisateur pour la première fenêtre flottante dans la zone cible de l'écran, la première fenêtre flottante dans la zone cible de l'écran vers la deuxième interface d'application, dans lequel la deuxième interface d'application est une interface d'application pour effectuer une interaction d'information avec un destinataire ;
un module d'envoi (1604), configuré pour envoyer, en réponse à la réception d'une première entrée d'instruction de libération par l'utilisateur pour la première fenêtre flottante à l'intérieur de la deuxième interface d'application, la ressource multimédia au destinataire ;
un deuxième module d'affichage, configuré pour afficher, en réponse à la réception d'instructions de déclenchement prédéfinies pour N autres ressources multimédias, N fenêtres flottantes sous une forme superposée, dans lequel N est un nombre entier positif non inférieur à 2, et afficher séquentiellement, en réponse à la réception d'une deuxième instruction de libération pour les N fenêtres flottantes dans la zone cible, les N fenêtres flottantes dans la zone cible ;
un troisième module d'affichage, configuré pour afficher, sous une forme superposée, en réponse à la réception d'une instruction de superposition de fenêtres dans la zone cible, les N fenêtres flottantes tenues dans la zone cible, et afficher un premier identifiant de numéro de fenêtre à une position spécifiée dans la zone cible ;
le deuxième module de déplacement (1603) est en outre configuré pour déplacer, en réponse à la réception d'une troisième instruction de déplacement des N fenêtres flottantes superposées, les N fenêtres flottantes superposées de la zone cible vers la deuxième interface d'application ;
et le module d'envoi (1604) est en outre configuré pour envoyer, en réponse à la réception d'une troisième instruction de libération pour les N fenêtres flottantes superposées, les N ressources multimédias stockées dans la zone cible au destinataire ensemble.

8. Dispositif selon la revendication 7, dans lequel le premier module de déplacement (1602) est en outre configuré pour :
dans un cas où la première fenêtre flottante est une première fenêtre à tenir, réduire une zone de la première interface d'application dans l'écran après que la première fenêtre flottante est déplacée vers une position prédéfinie de l'écran, et afficher la première fenêtre flottante sur la zone cible nouvellement formée.

9. Le dispositif de la revendication 7 ou 8, dans lequel le dispositif comprend en outre :
un quatrième module d'affichage, configuré pour zoomer, en réponse à la réception d'une première instruction prédéfinie pour la première fenêtre flottante dans la zone cible, la première fenêtre flottante, et effectuer un flou d'arrière-plan sur les zones autres que la première fenêtre flottante.

10. Le dispositif de l'une quelconque des revendications 7 à 9, dans lequel le dispositif comprend en outre :
un cinquième module d'affichage, configuré pour afficher de manière défilante, en réponse à la réception d'une instruction de visualisation de fenêtre dans la zone cible, les fenêtres flottantes tenues dans la zone cible.

11. Dispositif de partage d'une ressource multimédia, **caractérisé par le fait qu'**il comprend :
un processeur (1720) ; et
une mémoire (1704) configurée pour stocker des instructions exécutables par le processeur,
dans lequel le processeur est configuré pour mettre en oeuvre le procédé de partage de la ressource multimédia de l'une quelconque des revendications 1 à 6.

12. Médium de stockage sur lequel sont stockées des instructions de programme d'ordinateur qui, lorsqu'elles sont exécutées par un processeur, mettent en oeuvre le procédé de partage de la ressource multimédia de l'une quelconque des revendications 1 à 6.
